# EUROPEAN PATENT SPECIFICATION

(11) **EP 4 001 108 B1**
(45) Date of publication and mention of the grant of the patent: **28.02.2024**
(21) Application number: 20207443.1
(22) Date of filing: 13.11.2020
(51) Int. Cl.: B64C 27/54, B64C 27/41, B64C 27/35

(54) **ELASTIC TEETER BEARING FOR A ROTOR AND AIRCRAFT HAVING SUCH BEARING**
ELASTISCHES WIPPLAGER FÜR EINEN ROTOR UND FLUGZEUG MIT EINEM SOLCHEN LAGER
PALIER OSCILLANT ÉLASTIQUE POUR UN ROTOR ET AÉRONEF COMPRENANT UN TEL PALIER

(43) Date of publication of application: 25.05.2022
(73) Proprietor: Volocopter GmbH, 76646 Bruchsal (DE)
(72) Inventor: Howes, Jonathan Sebastian, Fareham, Hampshire PO14 4NZ (GB); Schäferlein, Ulrich, 76689 Karlsdorf (DE)
(74) Representative: LBP Lemcke, Brommer & Partner Patentanwälte mbB

(56) References cited:
- EP-A1- 3 345 830
- US-A- 2 232 289
- US-A- 2 296 251
- US-A1- 2010 038 469

## Description

The invention relates to an elastic teeter bearing for a rotor, particularly in an aircraft, according to claim 1.

The invention also relates to an aircraft with at least one propulsion unit comprising a rotor, in particular a multi-rotor VTOL aircraft with distributed electrically powered propulsion units, at least some of which comprise a rotor, according to claim 15.

Many existing rotorcraft, i.e., aircraft lifted or propelled by means of propellers or rotors use teetering rotor hubs with elastomeric bearings. Existing hubs of this kind use laminated elastomeric torsion bearings which are subject to intensive wear effects which significantly limit the lifetime of such bearings. Existing teetering rotor hubs use elastomeric teeter bearings which place the elastomeric elements primarily in shear under deformation induced by teeter oscillations of the rotor blades.

Furthermore, known teetering rotor hubs are vulnerable to catastrophic outcomes from single structural or mechanical faults. Although these units are well proven in service, a single structural failure of a primary load path can result in the loss of control of, or the release of the rotor.

EP 3 345 830 A1 discloses a rotor hub system comprising a teetering rotor hub disposed about a rotor mast, the teetering rotor hub comprising a first and a second yoke, each connected to a set of rotor blades. Said first and second yokes each comprise two so-called bridge plates that are part of a teetering assembly via a plurality of bearings, which allow the rotor blades to flap. The first yoke and the second yoke include a respective opening in a central portion thereof to allow the rotor mast to pass through the first yoke and the second yoke without contacting the respective yoke.

US 2010/038469 A1 discloses a rotor for a helicopter, which rotor has supporting means that comprise at least one supporting member made at least partly of elastomeric material to permit rotation of a rotor blade.

US 2 232 289 A discloses an aircraft the blades of which have freedom for flapping, for example by connection with a pivot or other means providing freedom for a blade swinging movement.

US 2 296 251 A discloses a rotor in an aircraft wherein transmission of a driving torque to the rotor creates movement about flapping pivots with consequent change of blade pitch angle.

There is a need for a lightweight, low maintenance and simple failsafe teetering rotor hub suitable for both powered and unpowered rotors, e.g., for an aircraft or for a gyroplane. Currently, almost all unpowered rotors use two blade teeter rotors with cyclic pitch adjustment achieved by direct control of the rotor rotational axis. As used herein, an unpowered rotor is a rotor that has no applied torque to the shaft (unlike a wind turbine wherein the generator applies a reaction torque to the shaft). There is also a need for an aircraft equipped with such a lightweight, low maintenance and simple failsafe teetering rotor hub.

It is the object of the invention to satisfy these needs.

According to the invention, the object is achieved by means of a bearing as defined in claim 1 and by means of an aircraft as defined in claim 15. Advantageous further embodiments are defined in the dependent claims.

According to a first aspect of the invention, an elastic teeter bearing for a rotor, particularly in an aircraft, comprises, rotatably arranged on a rotational axis of said rotor: a teeter beam, configured for attaching at least two rotor blades, or a one-piece rotor with at least two blades, on opposing sides thereof, said teeter beam being devised for performing a teetering motion with respect to said rotational axis and having at least two first lugs arranged on opposite sides at a first distance with respect to said rotational axis; a hub piece located below said teeter beam, said hub piece having at least two arms that extend outwardly in a radial direction with respect to said rotational axis, each of said arms having a second lug arranged at a second distance with respect to said rotational axis, said hub piece being a driven part for connecting to a drive shaft of a motor for driving said rotor; a bridge piece located above said teeter beam, said bridge piece having at least two arms that extend outwardly in a radial direction with respect to said rotational axis, each of said arms having a third lug arranged at a third distance with respect to said rotational axis; wherein said first to third lugs are either parallel or angled with respect to said rotational axis, such that respective connecting pins which pass through said first to third lugs on either side of said rotational axis are either parallel or, in the case of angled first to third lugs, obliquely oriented with respect to said rotational axis; and wherein a pair of elastic bushings, i.e., bushings made from elastic material, e.g., elastomers like polyurethane, natural rubber, butyl rubber or cushions made from metal, are arranged on each of said connecting pins between said first lug and said second lug and between said first lug an said third lug, respectively.

Teeter bearings are known, in particular, from helicopters. They generally comprise an active control of the rotor blade pitch angle. The present invention, on the other hand, may advantageously relate to a so-called "fixed pitch" configuration. With such configuration, the teeter bearing may allow some rotation of the rotor blades, this rotation preferably being passive, i.e., uncontrolled (or not actively controlled), which may differentiate embodiments of the present invention from known (helicopter) teeter bearings.

According to a second aspect of the invention, in an aircraft with at least one propulsion unit comprising a rotor, in particular a multi-rotor VTOL aircraft with distributed electrically powered propulsion units, at least some of which comprise a rotor, said at least one rotor comprises a bearing according to said first aspect of the invention, wherein at least two rotor blades of said at least one rotor, which can be a one-piece rotor with at least two blades, are attached to a teeter beam of said bearing on opposing sides thereof, wherein said hub piece is connected to a drive shaft of a motor comprised in said at least one propulsion unit.

The teetering pivot of the current invention uses simple elastic bushings mounted on a pin, i.e., said connecting pin (also referred to as teeter pin). The teetering axis is normal to the pin axis and the elastic bushings are primarily loaded in compression resulting in an intrinsically long fatigue life with a very simple and low-cost elastic component.

The teeter pins may advantageously be angled relative to the rotational axis of the rotor while remaining normal to the teetering axis to align with the resultant force vector due to the driving torque applied to the rotor and the lift produced by the rotor in a selected operational condition. These features ensure that most of the load seen by the bushings is along the axis of symmetry of the bushing with only teetering producing a moment load over the face of the bush. This further ensures that stress oscillations within the bushing due to teetering produce the minimum possible stress amplitude and hence a long fatigue life.

The invention also incorporates, in a preferred further embodiment thereof, which embodiment is potentially independent from said first aspect of the invention, a central retaining pin (or failsafe) that is trivially loaded in normal use but, in the case of most single failures of any other element of the hub, will both retain and constrain the rotor within positional limits relative to the hub piece that preserve its function as a rotor. Other than a primary rotor shaft failure, a complete failure of the torque-reacting elements of the hub will result in the retention and constraint of the rotor but without the continuation of power delivery to the rotor.

In a further preferred embodiment, a shaped sleeve is fitted over the central failsafe pin and, in conjunction with the bore through which it passes within the teeter beam, provides a limiting stop for teetering motion. Said sleeve may be made from a material particularly suited to resisting impact loading, e.g. nylon, fabric reinforced phenolic resin, or an elastomer such as rubber or polyurethane, etc. Use of an elastomer material helps to obtain a smooth teeter stop impact which has been seen during wind tunnel testing as an important issue when operating the rotor.

Prior art in this respect does not, to the knowledge of the applicant, include failsafe features, thus resulting in potential catastrophic results arising from the failure of individual hub elements. Such damage may be due to cyclic loading induced fatigue or from single impact events such as bird strike.

The current invention uses simple elastic bushings and preferably places them under some pre-compression. In a corresponding embodiment of the bearing according to the present invention the bushings are pre-compressed by means of the connecting or teeter pins

Teeter deflections then either increase or reduce the degree of compression of the bushings but do not place any part of the bushings in tension. As crack growth is primarily due to tensile loading, this compressive loading inhibits the growth of fatigue cracks within the bushings and results in the potential for a long service life with resulting low maintenance costs.

In an advantageous further embodiment, the bearing according to the present invention further comprises a shoulder on each one of the connecting pins, which shoulder is in contact with a respective one of said third lugs, i.e., with said bridge piece. In this way the bridge piece can be clamped against said shoulder on the connecting pin. The shoulder is preferably dimensioned in terms of surface to provide a desired degree of pre-compression to the bushings.

In another preferred embodiment of the bearing according to the invention the elastic bushings are devised in the form of truncated cones, preferably with a respective base of said cones being in contact with said teeter beam. Applicant has found that this configuration provides the best effects as far as the teetering behaviour of the bearing and its wear resistance are concerned. However, there are situations where it is preferred to arrange the bushings differently, e.g., the other way around. If the narrow end or tip of said cones is against the central lug (i.e., the teeter beam) then stiffness will be lower than with the base against the lug (i.e., the teeter beam).

However, other forms can be considered for the bushings as well: There is an advantage in configuring the bushings to generate a defined non-linear characteristic with deflection. If a piece of elastic material resting on a solid surface is compressed against that surface then, as the compression is increased, the ultimate stiffness will be that of the surface against which the elastic material is compressed. If the piece of elastic material is shaped correctly, any selected load/deflection characteristic can be achieved. This is also true of the bushings in this application.

Problems of oscillatory resonance are very common in rotorcraft. With any spring-mass system, the natural (Eigen) frequency is a direct function of the force-deflection gradient of the spring element. If a non-linear spring is used, then at each deflection amplitude, the resonant frequency has a unique value. If excited by an external oscillatory force, then oscillation cannot build as any increase in amplitude results in a changed natural frequency and unless the excitation frequency changes to track this change in natural frequency, the excitation becomes ineffective. This constitutes an important feature of the concept of the use of elastic bushings in the present invention.

Therefore, the shaping of the bushings to achieve a selected non-linearity can be used in embodiments of the present invention together with the inherently non-linear elastic behaviour of such bushings when loaded in compression. Using, e.g., finite element methods, one could define a custom form for the bushings for a specific use.

Alternatively or additionally, one could modify the shape or structure of the solid surface, against which the bushings are compressed, in order to influence the elastic behaviour of the bushings.

In yet another preferred embodiment of the bearing according to the invention each connecting pin is threadedly connected to one of said second and third lugs, wherein preferably each connecting pin, at a first end thereof, has a corresponding outer thread whereas said second or third lug has a corresponding inner thread. In this way, the connecting may anchor directly and conveniently in said second or third lugs, i.e., in the hub piece or in the bridge piece. Further at said first end, a radially extending screw head can be provided as an abutment.

Preferably, in yet another embodiment of the bearing according to the invention each connecting pin has an outer thread at a second end that threadedly engages a screw nut. In this way, a desired degree of (pre-)compression can be easily achieved for the elastic bushings, by simply tightening or loosening said screw nuts.

In another embodiment of the bearing according to the invention said hub piece and said bridge piece are rotated in different directions with respect to the teeter beam around said rotational axis. Such an arrangement is particularly well suited for powered rotors, e.g., in an aircraft.

In a highly advantageous embodiment of the bearing according to the invention said first to third lugs, i.e., the respective bores comprised therein and accordingly also said connecting pins are angled at 15° to 50°, preferably 20 to 40°, most preferably 30 to 35°, with respect to said rotational axis. This helps to achieve the above-mentioned compressional load on the bushings, since this configuration ensures that the resultant force induced by the normal driving torque on the rotor and the induced lift passes along the axis of each connecting pin. This reduces shearing loads on the elastic bushings and so reduces the potential for progressive damage due to deformation other than compression within the bushings.

Such an embodiment serves to align the bushing axis with the resultant force arising from the driving torque and the rotor lift and is dictated entirely by the relative magnitude of these two forces at the bushing axis radius from the rotor axis and a selected design operating condition. The range could therefore, in principle, comprise any angle between 0° and 90°. For an unpowered rotor (a gyroplane for example), the angle would advantageously be 0°.

Therefore, in a corresponding further embodiment of the invention said hub piece and said bridge piece are aligned with respect to the teeter beam, in particular in the case of an unpowered rotor.

In order to provide failsafe behaviour, in a further embodiment the bearing according to the invention further comprises a central pin (or failsafe pin) extending along said rotational axis, at least through said hub piece, said teeter beam and said bridge piece, which central pin is devised for fixing a relative position of said hub piece and said bridge piece on said rotational axis. If lift load path integrity is compromised by a structural failure, the teeter beam may become free to move in the direction of the lift force relative to the central failsafe pin. In this event, the motion is arrested by contact with the bridge piece and lift forces are then transmitted to a driven part of the hub directly by the failsafe pin. In this way, catastrophic failure of the bearing is prevented in a sense that a failsafe constraint prevents the rotor from developing adverse behaviour after a failure including failure of the bearing.

It should be noted that providing said central pin (or failsafe pin), as introduced in claim 10, can also be done separately from providing the additional features of claim 1, in particular said angled lugs and obliquely oriented connecting pins. Said feature (i.e., the failsafe pin) and any other feature depending thereon is not limited to the specific embodiments as defined in the preceding claims.

In order to enable and restrict a teetering motion of the teeter beam, in a further embodiment of the bearing according to the invention said bearing further comprises an angled sleeve (or teeter stop sleeve) around said central pin extending through an opening in said teeter beam, said angular sleeve preferably having the form of a doubly truncated cone, a maximum diameter of which is in close clearance with an inner diameter of said opening. In this way, the outer inclined cone surfaces permit and restrict said teetering motion. It is undesirable to have constant contact due to wear considerations. It is preferred that the flanks of the conical parts should touch the bore evenly when the maximum teeter amplitude is reached. Close clearance is desirable for fail safety as it provides radial constraint to the rotor in a failsafe situation.

Providing a double cone (or two cones) helps to spread the load over a greater surface area, thus reducing wear and increasing lifetime.

Most preferably, said hub piece and said bridge piece further abut on respective opposing ends of said sleeve, which sleeve therefore functions to control the relative arrangement of said hub piece and said bridge piece, thus also controlling (pre-)compression of the elastic bushings.

In yet another preferred embodiment of the bearing according to the invention said sleeve has a circumferential groove, said groove preferably located at an axial position of a greatest diameter of said sleeve. In this way, said groove may define a default teetering position of the teeter beam, while further increasing stability and reducing wear effects. The groove also serves to remove part of the sleeve that would otherwise be in permanent contact with the bore through the teeter beam. It could, in an alternative embodiment, be replaced with a cylindrical section of reduced diameter. The clearance between this part and the inside of the bore defines the radial constraint in the event of primary load path failure.

Thus, as stated above, the invention is by no means limited to the presence of said groove. It is important that the greatest diameter is in close clearance with the bore. Said groove is an easy way to achieve this, but a flat region at that point would constitute a possible alternative embodiment.

In another embodiment of the bearing according to the invention said bridge piece comprises at least one buffer projection, preferably at least one buffer projection on each side of the rotational axis, on an underside thereof facing the teeter beam. Said projections can be configured in a close clearance with the upper face of the teeter beam. If a failure of a primary lift load path component occurs, vertical movement of the teeter beam is then limited by contact with these buffer projections. Should the failure be such that the vertical movement of the teeter beam is asymmetric, then limiting the degree of asymmetry is important in order to prevent the rotor blades from moving significantly out of their normal plane of rotation. If not so constrained there is a significant danger of contact between aircraft fixed structure and the rotor blades.

In this way, said failsafe constraint may be provided (jointly) by the failsafe pin (constrains the teeter stop sleeve and the bridge piece), the bridge (and the buffer features below the bridge, vertical constraint) and the teeter stop sleeve (radial constraint within operating limits).

A surface coating, or treatment on the mating faces of the teeter beam and said buffer projections may constitute an advantageous further embodiment as they experience some relative sliding motion. They need to last long enough in a failsafe situation to allow the aircraft to land safely. Amorphous diamond, which is extremely hard, very tough and has very low friction, can be an appropriate treatment for aluminum alloys in this situation. However, the invention is not limited in this respect.

In a further embodiment of the bearing according to the invention at least some, preferably all of said first to third lugs are arranged at respective free ends of said teeter beam, hub piece and bridge piece, respectively. In this way, a space required by the bearing can be minimized.

In another embodiment of the bearing according to the invention at least said second and third distances are equal. In this way, transmission of loads can be optimized.

Generally, the rotor, i.e., the individual rotor blades has (have) a leading edge and a trailing edge in relation to a sense of rotation of the rotor. The rotor also has a rotor axis, which must not be confounded with the rotational axis (of the motor). At rights angles with respect to said rotor axis lies so-called normal axis. With respect to said normal axis, the teeter axis of known (active) teeter bearings is rotated in positive direction by an angle ϕ, ϕ > 0°.

A range of skew angles were explored analytically by the applicant and the results for a negative skew angle (ϕ < 0°) were surprising and of great interest. Accordingly, this configuration was designed as a physical specimen and tested. Wind tunnel experiments confirmed that a negative rotation of the teeter axis, i.e., with ϕ < 0°, preferably -60° < ϕ < -30°, generates a preferred lift vector, especially in the case of a rotor without cyclic control, which is a preferred use case of the present invention. Alternative embodiments of the present invention therefore comprise a teeter axis that is either rotated in positive direction or (preferably) in negative direction with respect to said neutral axis of the rotor.

This may generate a lift vector with reduced backward tilt in a direction opposite the direction of flight, while keeping the rotor stable aerodynamically, which may lead to an overall power reduction in forward flight.

Thus, the present description further comprises a novel design of an aerodynamically stable rotor with negative rotation of the teeter axis, which is potentially independent from the described elastic bushings and/or the failsafe design.

Use of the present invention is by no means limited to aircraft but can be extended to all kinds of rotors (powered or not) that are subject to a teetering motion, e.g., in wind energy turbines.

Additional features and advantages of the invention will become apparent from the following description of exemplary embodiments with reference to the attached drawings.
- Fig. 1: shows an aircraft which can make use of the present invention;
- Fig. 2: shows a general perspective view of an elastic bearing or hub designed on the principles of the invention;
- Fig. 3: shows a section through the centre of the bearing or hub of Fig. 2;
- Fig.4: shows an elevation view of the bearing or hub of Fig. 2 projected on to a plane defined by a teeter axis and a rotational axis; and
- Fig. 5: shows a section through a connecting pin assembly comprised in the bearing or hub of Fig. 2.

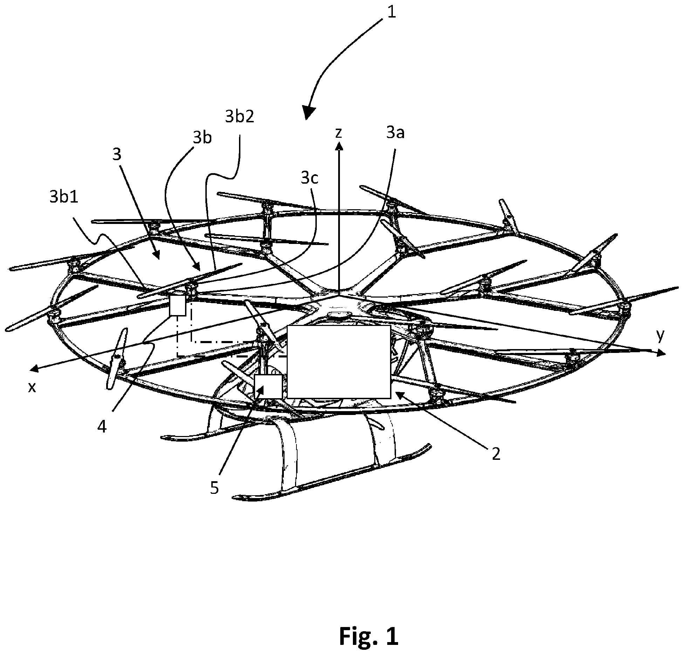

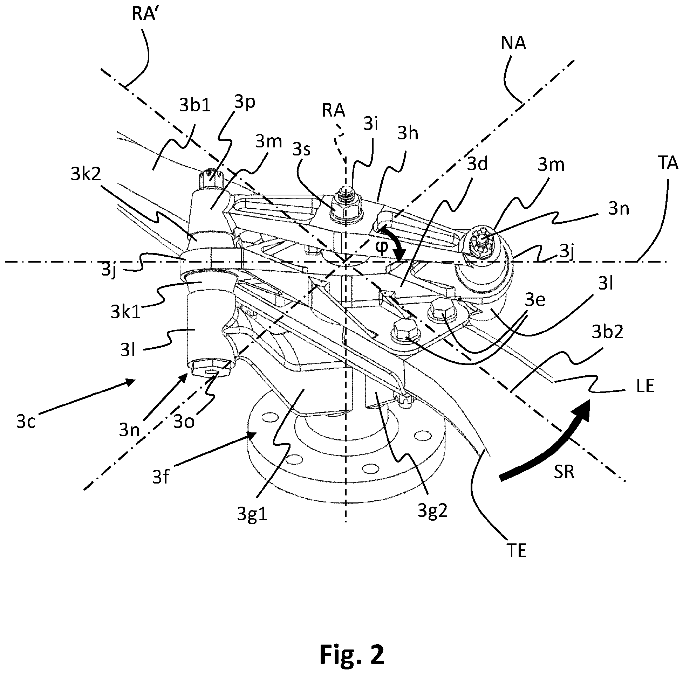

Figure 1 shows an aircraft 1 in the form of a multi-rotor VTOL aircraft as produced by the applicant. Aircraft 1 comprises an onboard flight controller 2 for controlling a plurality of, e.g., 18 electrically powered propulsion units 3, each propulsion unit at least comprising an electric motor 3a and a rotor 3b, said rotor 3b having two rotor blades 3b1, 3b2 attached to a bearing 3c, as will be described with reference to Figures 2 through 5. In the following, element 3c will also be referred to as "hub". For reason of clarity, only one propulsion unit 3 and its components are explicitly denoted in Figure 1. Reference numeral 4 denotes an exemplary sensor unit for measuring a current state of aircraft 1 and/or of propulsion unit 3. Reference numeral 5 denotes means for pilot input into flight controller 2 for steering the aircraft 1. Sensor unit 4 and propulsion units 3 are operatively connected in communication with flight controller 2, as depicted. Reference numerals x, y, and z denote the aircraft's main control axes, i.e., roll, pitch, and yaw.

Figure 2 shows a general view of a bearing 3c designed on the principles of the invention. The rotor blades 3b1, 3b2 (which need not be separate elements but could form integral parts of a one-piece rotor) are attached to a teeter beam 3d by means of stud bolts 3e that are denoted only on one side of the arrangement. Reference numeral RA denotes the rotational axis of the assembly. Below teeter beam 3d there is located a hub piece 3f that is devised for connection to a driving shaft of a motor (not shown; cf. reference numeral 3a in Figure 1). Hub piece 3f has two arms 3g1, 3g2 (driving arms) that extend beyond a main body of teeter beam 3d with respect to the rotational axis RA. Above teeter beam 3d there is located a bridge piece 3h that also extends beyond a main body of teeter beam 3d with respect to the rotational axis RA. Hub piece 3f and bridge piece 3h are connected with a fixed relative position with respect to and along the rotational axis RA by means of a central or failsafe pin 3i, as will become more apparent from Figure 2. Teeter beam 3d is supported via respective lugs 3j at its two ends which are sandwiched between pairs of elastomeric bushings 3k1, 3k2 such that an axis (not shown in Figure 1) passing through a centre of each of the two lugs 3j forms a teeter pivot or teeter axis for the rotor blades 3b1, 3b2, and any angular deflection about this teeter axis compresses the bush, e.g., bushing 3k1 on one side of the teeter axis and reduces compression on the bush, e.g., bushing 3k2 on the other side of the teeter axis. Elastomeric bushings are described here and in the following as a non-limiting example for more general elastic bushings (cf. above).

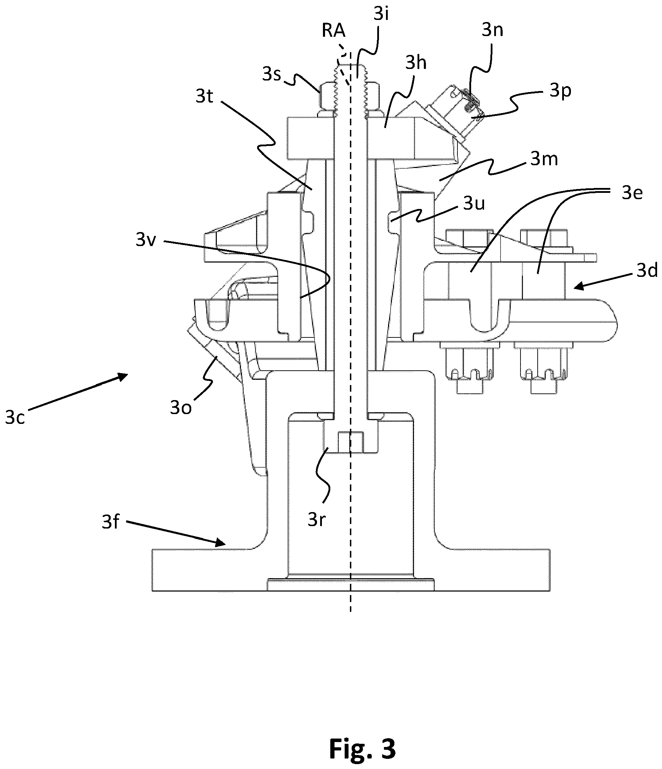

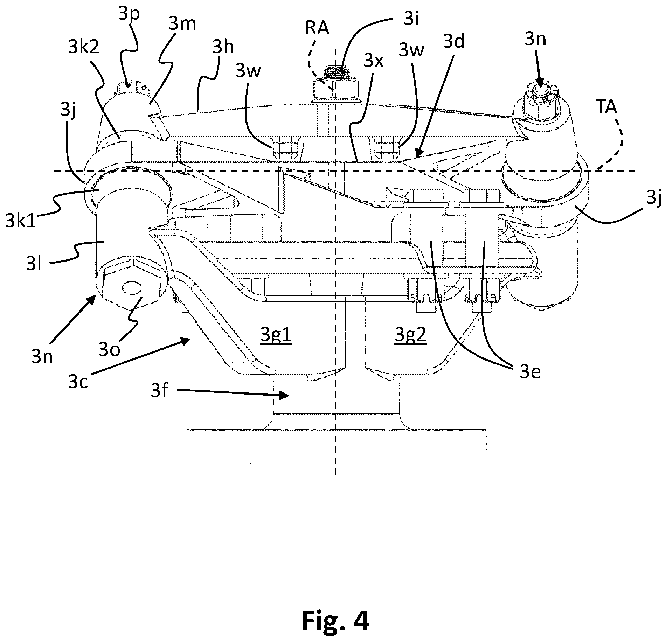

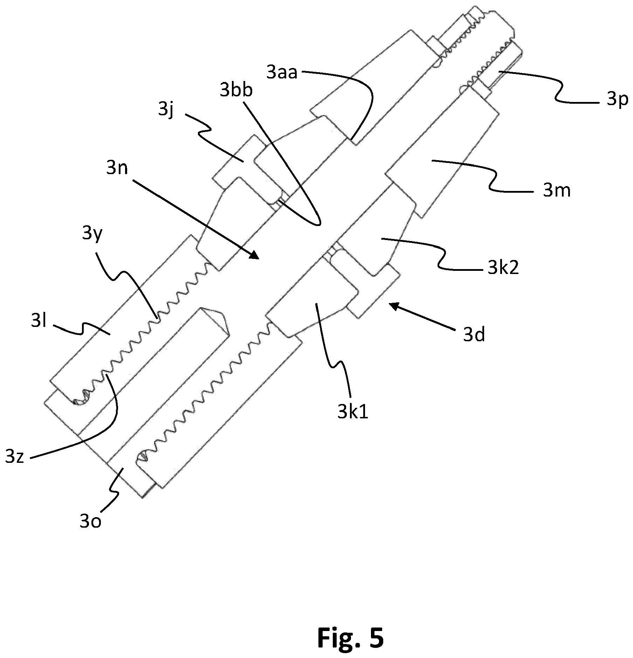

In this way, the teeter beam 3d passes through a portal comprising the driven part of the hub (the hub piece 3f) with its arms 3g1, 3g2, the two pairs of elastomeric bushings 3k1, 3k2 together with their mountings (cf. Figure 5) and said bridge piece 3h. At respective free ends of both the hub piece 3f and the bridge piece 3h there are located lugs 3l, 3m which are aligned with lugs 3j of teeter beam 3d for receiving connecting pins 3n, as will become more apparent from Figures 4 and 5. Lugs 3j, 3l and 3m are angled with respect to the rotational axis RA, in particular by an angle of approximately 30° to 35° as will become particularly apparent from Figure 3. As stated before, this angle only applies to a powered rotor, while an unpowered rotor such as that on a gyroplane would not benefit from this. For an unpowered rotor, the angle would preferably be 0°. Connecting pins 3n comprises a screw head 3o on one end and threadedly engage a screw nut 3p at their other end.

The primary load path through the assembly is from the driven part of the hub or hub piece 3f via the two driving arms 3g1, 3g2 on this component, to said pair of connecting pins 3n passing through the axes of the elastomeric bushings 3k1, 3k2 and then to the pair of lugs 3j which directly load the teeter beam 3d and hence the attached rotor blades 3b1, 3b2. Between the bridge piece 3h and the driven part of the hub (hub piece 3f) passes said failsafe pin 3i along the axis of rotation of the rotor (i.e., rotational axis RA) which provides a direct load path between the driven part of the hub (hub piece 3f) and the bridge piece 3h. Any failure of a component within the primary load path results in a resultant relative motion of the teeter beam 3d to the failsafe pin 3i, and so the failsafe pin 3i reacts any radial loading directly, while the bridge piece 3h reacts lift loads via the failsafe pin 3i. The failsafe pin 3i is thus trivially loaded in normal operation but is so configured to carry the full flight loads in the event of failure of any primary load path component.

The rotor, i.e., the individual rotor blades 3b1, 3b2, has (each have) a leading edge LE and a trailing edge TE in relation to a sense of rotation SR of the rotor. Reference numeral RA' denotes the rotor axis, which must not be confounded with aforementioned rotational axis RA. At rights angles with respect to said rotor axis RA' lies so-called normal axis NA. With respect to said normal axis NA, teeter axis TA is rotated in positive direction by an angle ϕ, ϕ > 0°, i.e., toward said leading edge LE. This is in accordance with known (active) teeter bearings.

However, wind tunnel experiments have shown that a negative rotation of the teeter axis TA, i.e., with ϕ < 0°, preferably -60° < ϕ < -30°, may generate a preferred lift vector in the case of a multirotor aircraft of the type shown in Figure 1. Alternative embodiments of the present invention therefore comprise a teeter axis TA that is either rotated in positive direction or (preferably) in negative direction, i.e., toward said trailing edge TE, with respect said neutral axis NA of the rotor.

This achieves a lift vector that has reduced backward tilt in a direction opposite the direction of flight, while keeping the rotor stable aerodynamically, which may lead to a power reduction in forward flight.

Taking into account that in known use cases with fixed pitch rotors, the air stream comes either from a head-on direction along rotational axis RA (e.g., for propeller airplanes) or from the side (e.g., for helicopters, as shown in Figure 2), the present description further comprises a novel design of an aerodynamically stable rotor with negative rotation of the teeter axis.

Figure 3 shows a section through the centre of the bearing or hub 3c on a plane passing through the failsafe pin 3i or rotational axis RA. This shows the failsafe pin 3i connecting the bridge piece 3h to the driven part of the hub (hub piece 3f). As can be seen from said Figure, hub piece 3f is hollow and serves as an abutment for screw head 3r of failsafe pin 3i. The other end of failsafe pin 3i threadedly engages a screw nut 3s located on bridge piece 3h. Sleeved over failsafe pin 3i is a shaped sleeve 3t which has the form of a doubly truncated cone with a circumferential groove 3u. Groove 3u divides sleeve 3t into two asymmetrical parts, as shown. A maximum diameter of sleeve 3t essentially corresponds to a clearance of a hole or bore 3v through teeter beam 3d along rotational axis RA. A length of sleeve 3t along rotational axis RA defines the distance between bridge piece 3h and hub piece 3f. Sleeve 3t and bore 3v, i.e. the mutually contacting surfaces thereof, provide teeter limiting stops for the rotor. If lift load path integrity is compromised by a structural failure, the teeter beam 3d may become free to move in the direction of a lift force relative to the failsafe pin 3i. In this event, the motion is arrested by contact with the bridge piece 3h, and lift forces are then transmitted to the driven part of the hub (hub piece 3f) directly by the failsafe pin 3i.

Figure 4 shows an elevation view of the hub or bearing 3c projected on to a plane defined by the teeter axis TA and the hub rotational axis RA. This view additionally shows a pair of buffer projections 3w on the lower face of the bridge piece 3h which are configured in a close clearance with an upper face 3x of the teeter beam 3d. If a failure of a primary lift load path component occurs, vertical movement of the teeter beam 3d is then limited by contact with these buffer projections 3w. Should the failure be such that the vertical movement of the teeter beam 3d is asymmetric, then limiting the degree of asymmetry is important in order to prevent the rotor blades 3b1, 3b2 (Figures 1, 2) from moving significantly out of their normal plane of rotation. If not so constrained, either by bridge piece 3h itself or by projections 3w, there is a significant danger of contact between an aircraft fixed structure (cf. Figure 1) and the rotor blades 3b1, 3b2 (Figures 1, 2).

Also indicated on Figure 4 are the lower ends of two teeter pins (i.e., said connecting pins 3n) passing through the axes or central bores of the elastomeric bushings 3k1, 3k2. In addition to providing the primary load path between the driven part of the hub (hub piece 3f) and the elastomeric bushings 3k1, 3k2, these connecting pins 3n are also angled, as already explained above, i.e., extend under an oblique angle with respect to the rotational axis RA. This ensures that the resultant force induced by the normal driving torque on hub piece 3f and the lift generated by the rotor blades 3b1, 3b2 (Figures 1, 2) passes along the axis of each connecting pin 3n. This, in turn, reduces shearing loads on the elastomeric bushings 3k1, 3k2 and so reduces the potential for progressive damage due to deformation other than compression within the elastomeric bushings 3k1, 3k2.

Figure 5 shows a section through the teeter pin or connecting pin assembly, which assembly comprises said teeter or connecting pin 3n together with all of the components arranged thereon. At the lower end, from bottom left to top right, is shown lug 3l of hub piece 3f, as previously described, which can be an integral part of the driven part of the hub 3c. Teeter pin 3n anchors directly into this component. To this end, lug 3l comprises an internal thread 3y which engages with an external thread 3z on connecting pin 3n, as shown. Connecting pin 3n also comprises a shoulder, as denoted by means of reference numeral 3aa. Furthermore, connecting pin 3n passes through central bores of the two elastomeric bushings 3k1, 3k2, which bushings 3k1, 3k2 each have the form of a truncated cone, a wider base of which faces teeter beam 3d. The upper end of connecting pin 3n passes through lug 3m at the end of the bridge piece 3h, as also previously described. which is clamped against said shoulder 3aa on the connecting pin 3n under the action of screw head 3o and screw nut 3p. Shoulder 3aa is dimensioned to provide a degree of pre-compression to the bushings 3k1, 3k2: the smaller an area of said shoulder 3aa facing lug 3m, the greater a (pre-compression force on the bushings 3k1, 3k2.

Between the upper and lower bushings 3k1, 3k2, and clamped by the bushings 3k1, 3k2, is lug 3j at the end of the teeter beam 3d, as previously described.

This lug 3j has a clearance hole 3bb around connecting pin 3n such that any rotation of the lug 3j in the plane of the Figure will compress and decompress the bushings 3k1, 3k2 differentially on each side of connecting pin 3n and so provide an elastomeric hinge for the teeter beam 3d.

## Claims

1. Elastic teeter bearing (3c) for a rotor (3b), particularly in an aircraft (1), comprising, rotatably arranged on an rotational axis (RA) of said rotor (3b):
a teeter beam (3d), configured for attaching thereto at least two rotor blades (3b1, 3b2), or a one-piece rotor with at least two blades, on opposing sides thereof, said teeter beam (3d) being devised for performing a teetering motion with respect to said rotational axis (RA) and having at least two first lugs (3j) arranged on opposite sides at a first distance with respect to said rotational axis (RA);
a hub piece (3f) located below said teeter beam (3d), said hub piece (3f) having at least two arms (3g1, 3g2) that extend outwardly in a radial direction with respect to said rotational axis (RA), each of said arms (3g1, 3g2) having a second lug (3l) arranged at a second distance with respect to said rotational axis (RA), said hub piece (3f) being a driven part arranged for connecting to a drive shaft of a motor for driving said rotor (3b);
a bridge piece (3h) located above said teeter beam (3d), said bridge piece (3h) having at least two arms that extend outwardly in a radial direction with respect to said rotational axis (RA), each of said arms having a third lug (3m) arranged at a third distance with respect to said rotational axis (RA);
wherein said first to third lugs (3j, 3l, 3m) are either parallel or angled with respect to said rotational axis (RA), such that respective connecting pins (3n) which pass through said first to third lugs (3j, 3l, 3m) on either side of said rotational axis (RA) are parallel or, in the case of angled first to third lugs, obliquely oriented with respect to said rotational axis (RA); and
wherein a pair of elastic bushings (3k1, 3k2) are arranged on each of said connecting pins (3n) between said first lug (3j) and said second lug (3l) and between said first lug (3j) an said third lug (3m), respectively.

2. The bearing (3c) according to claim 1, wherein the elastic bushings (3k1, 3k2) are pre-compressed by means of the connecting pins (3n).

3. The bearing (3c) according to claim 1 or 2, further comprising a shoulder (3aa) on each one of the connecting pins (3n), which shoulder (3aa) is in contact with a respective one of said third lugs (3m).

4. The bearing (3c) according to any one of claims 1 through 3, wherein the elastic bushings (3k1, 3k2) are devised in the form of truncated cones, preferably with a respective base being in contact with said teeter beam (3d).

5. The bearing (3c) according to any one of claims 1 through 4, wherein each connecting pin (3n) is threadedly connected to one of said second (3l) and third lugs (3m), wherein preferably each connecting pin (3n), at a first end, has a corresponding outer thread (3z) whereas said second or third lug (3l, 3m) has a corresponding inner thread (3y).

6. The bearing (3c) according to claim 5, wherein each connecting pin (3n) has an outer thread at a second end that threadedly engages a screw nut (3s).

7. The bearing (3c) according to any one of claims 1 through 6, wherein said hub piece (3f) and said bridge piece (3h) are rotated in different directions with respect to the teeter beam (3d) around said rotational axis (RA).

8. The bearing (3c) according to any one of claims 1 through 7, wherein said first to third lugs (3j, 3l, 3m) are angled at 15° to 50°, preferably 20° to 40°, most preferably 30 to 35°, with respect to said rotational axis (RA).

9. The bearing according to any one of claims 1 through 6, wherein said hub piece (3f) and said bridge piece (3h) are aligned with respect to the teeter beam (3d), in particular in the case of an unpowered rotor.

10. The bearing (3c) according to any one of claims 1 through 9, further comprising a central pin (3i) extending along said rotational axis (RA), at least through said hub piece (3f), said teeter beam (3d) and said bridge piece (3h), which central pin (3i) is devised for fixing a relative position of said hub piece (3f) and said bridge piece (3h) on said rotational axis (RA).

11. The bearing (3c) according to claim 10, further comprising an angled sleeve (3t) around said central pin (3i) extending through an opening (3v) in said teeter beam (3d), said angled sleeve (3t) preferably in the form of a doubly truncated cone, a maximum diameter of which is in close clearance with an inner diameter of said opening (3v), wherein most preferably said hub piece (3f) and said bridge piece (3h) abut on respective opposing ends of said sleeve (3t).

12. The bearing (3c) according to any one of claims 1 through 11, wherein said bridge piece (3h) comprises at least one buffer projection (3w), preferably at least one buffer projection (3w) on each side of the rotational axis (RA), on an underside thereof facing the teeter beam (3d).

13. The bearing (3c) according to any one of claims 1 through 12, wherein at least some, preferably all of said first to third lugs (3j, 3l, 3m) are arranged at respective free ends of said teeter beam (3d), hub piece (3f) and bridge piece (3h), respectively.

14. The bearing (3c) according to any one of claims 1 through 13, wherein a teeter axis (TA) is rotated by an angle ϕ, ϕ > 0° or ϕ < 0°, preferably -60° < ϕ < -30°, with respect to a normal axis (NA) of the rotor, which normal axis (NA) is oriented at right angles with respect to a rotor axis (RA').

15. Aircraft (1) with at least one propulsion unit (3) comprising a rotor (3b), wherein said at least one rotor (3b) comprises a bearing (3c) according to any one of claims 1 through 14, wherein at least two rotor blades (3b1, 3b2) of said at least one rotor (3b) are attached to a teeter beam (3d) of said bearing (3c) on opposing sides thereof, wherein said hub piece (3f) is connected to a drive shaft of a motor (3a) comprised in said at least one propulsion unit (3), wherein the aircraft is in particular a multi-rotor VTOL aircraft with distributed electrically powered propulsion units, at least some of which comprise the rotor.

## Patentansprüche

1. Elastisches Wipplager (3c) für einen Rotor (3b), besonders in einem Flugzeug (1), umfassend, drehbar auf einer Drehachse (RA) des Rotors (3b) angeordnet:
einen Wippbalken (3d), der dazu ausgelegt ist, dass an ihm mindestens zwei Rotorblätter (3b1, 3b2) oder ein einstückiger Rotor mit mindestens zwei Rotorblättern an dessen gegenüberliegenden Seiten angebracht werden, wobei der Wippbalken (3d) dazu ausgelegt ist, eine Wippbewegung bezüglich der Drehachse (RA) durchzuführen, und mindestens zwei erste Ösen (3j) aufweist, die auf gegenüberliegenden Seiten in einem ersten Abstand bezüglich der Drehachse (RA) angeordnet sind;
ein Nabenstück (3f), das unterhalb des Wippbalkens (3d) angeordnet ist, wobei das Nabenstück (3f) mindestens zwei Arme (3g1, 3g2) hat, die sich in einer radialen Richtung bezüglich der Drehachse (RA) nach außen erstrecken, wobei jeder der Arme (3g1, 3g2) eine zweite Öse (3l) hat, die in einem zweiten Abstand bezüglich der Drehachse (RA) angeordnet ist, wobei das Nabenstück (3f) ein angetriebenes Teil ist, das dazu angeordnet ist, mit einer Antriebswelle eines Motors zum Antreiben des Rotors (3b) verbunden zu sein;
ein Brückenstück (3h), das oberhalb des Wippbalkens (3d) angeordnet ist, wobei das Brückenstück (3h) mindestens zwei Arme hat, die sich in einer radialen Richtung bezüglich der Drehachse (RA) nach außen erstrecken, wobei jeder der Arme eine dritte Öse (3m) hat, die in einem dritten Abstand bezüglich der Drehachse (RA) angeordnet ist;
wobei die ersten bis dritten Ösen (3j, 3l, 3m) entweder parallel oder in einem Winkel zu der Drehachse (RA) sind, sodass jeweilige Verbindungsstifte (3n), die auf beiden Seiten der Drehachse (RA) durch die ersten bis dritten Ösen (3j, 3l, 3m) geführt sind, parallel oder, in dem Fall der in einem Winkel angeordneten ersten bis dritten Ösen, schräg bezüglich der Drehachse (RA) ausgerichtet sind; und
wobei ein Paar elastischer Buchsen (3k1, 3k2) auf den Verbindungsstiften (3n) jeweils zwischen der ersten Öse (3j) und der zweiten Öse (3l) bzw. zwischen der ersten Öse (3j) und der dritten Öse (3m) angeordnet sind.

2. Lager (3c) gemäß Anspruch 1, wobei die elastischen Buchsen (3k1, 3k2) mittels der Verbindungsstifte (3n) vorkomprimiert sind.

3. Lager (3c) gemäß Anspruch 1 oder 2, ferner umfassend eine Schulter (3aa) an jedem der Verbindungsstifte (3n), wobei die Schulter (3aa) mit einer jeweiligen der dritten Ösen (3m) in Kontakt ist.

4. Lager (3c) gemäß einem der Ansprüche 1 bis 3, wobei die elastischen Buchsen (3k1, 3k2) in der Form von Kegelstümpfen ausgebildet sind, wobei eine Grundfläche vorzugsweise jeweils mit dem Wippbalken (3d) in Kontakt ist.

5. Lager (3c) gemäß einem der Ansprüche 1 bis 4, wobei jeder Verbindungsstift (3n) mit einer aus den zweiten (3l) und dritten (3m) Ösen in Gewindeeingriff ist, wobei vorzugsweise jeder Verbindungsstift (3n) an einem ersten Ende ein entsprechendes Außengewinde (3z) hat, während die zweite oder dritte Öse (3l, 3m) ein entsprechendes Innengewinde (3y) hat.

6. Lager (3c) gemäß Anspruch 5, wobei jeder Verbindungsstift (3n) ein Außengewinde an einem zweiten Ende hat, das mit einer Schraubenmutter (3s) in Gewindeeingriff ist.

7. Lager (3c) gemäß einem der Ansprüche 1 bis 6, wobei das Nabenstück (3f) und das Brückenstück (3h) in unterschiedlichen Richtungen bezüglich des Wippbalkens (3d) um die Drehachse (RA) gedreht werden.

8. Lager (3c) gemäß einem der Ansprüche 1 bis 7, wobei die ersten bis dritten Ösen (3j, 3l, 3m) in einem Winkel von 15° bis 50°, vorzugsweise 20° bis 40°, am meisten vorzuziehen 30° bis 35° bezüglich der Drehachse (RA) angewinkelt sind.

9. Lager gemäß einem der Ansprüche 1 bis 6, wobei das Nabenstück (3f) und das Brückenstück (3h) insbesondere in dem Fall eines nicht angetriebenen Rotors bezüglich des Wippbalkens (3d) ausgerichtet sind.

10. Lager (3c) gemäß einem der Ansprüche 1 bis 9, ferner umfassend einen mittigen Stift (3i), der sich entlang der Drehachse (RA) mindestens durch das Nabenstück (3f), den Wippbalken (3d) und das Brückenstück (3h) erstreckt, wobei der mittige Stift (3i) zum Fixieren einer Relativposition des Nabenstücks (3f) und des Brückenstücks (3h) auf der Drehachse (RA) ausgelegt ist.

11. Lager (3c) gemäß Anspruch 10, ferner umfassend eine angewinkelte Muffe (3t) um den mittigen Stift (3i), die sich durch eine Öffnung (3v) in dem Wippbalken (3d) erstreckt, wobei die angewinkelte Muffe (3t) vorzugsweise in der Form eines doppelten Kegelstumpfs vorliegt, dessen maximaler Durchmesser in einem engen Abstand zu einem Innendurchmesser der Öffnung (3v) ist, wobei das Nabenstück (3f) und das Brückenstück (3h) am meisten vorzuziehen an jeweiligen gegenüberliegenden Enden der Muffe (3t) anstoßen.

12. Lager (3c) gemäß einem der Ansprüche 1 bis 11, wobei das Brückenstück (3h) mindestens einen Pufferfortsatz (3w), vorzugsweise mindestens einen Pufferfortsatz (3w) auf jeder Seite der Drehachse (RA) auf dessen Unterseite zu dem Wippbalken (3d) hin weisend umfasst.

13. Lager (3c) gemäß einem der Ansprüche 1 bis 12, wobei mindestens einige, vorzugsweise alle, aus den ersten bis dritten Ösen (3j, 3l, 3m) jeweils an freien Enden des Wippbalkens (3d), des Nabenstücks (3f) bzw. des Brückenstücks (3h) angeordnet sind.

14. Lager (3c) gemäß einem der Ansprüche 1 bis 13, wobei eine Wippachse (TA) um einen Winkel ϕ, ϕ > 0° oder ϕ < 0°, vorzugsweise -60° < ϕ < -30° bezüglich einer Normalachse (NA) des Rotors gedreht wird, wobei die Normalachse (NA) in einem rechten Winkel bezüglich einer Rotorachse (RA') ausgerichtet ist.

15. Flugzeug (1) mit mindestens einer Vortriebseinheit (3), umfassend einen Rotor (3b), wobei der mindestens eine Rotor (3b) ein Lager (3c) gemäß einem der Ansprüche 1 bis 14 umfasst, wobei mindestens zwei Rotorblätter (3b1, 3b2) des mindestens einen Rotors (3b) an einem Wippbalken (3d) des Lagers (3c) an dessen gegenüberliegenden Seiten befestigt sind, wobei das Nabenstück (3f) mit einer Antriebswelle eines Motors (3a) verbunden ist, der in der mindestens einen Vortriebseinheit (3) enthalten ist, wobei das Flugzeug insbesondere ein Multi-Rotor-VTOL-Flugzeug mit verteilten elektrisch angetriebenen Vortriebseinheiten ist, von denen mindestens einige den Rotor umfassen.

## Revendications

1. Palier oscillant élastique (3c) pour un rotor (3b), en particulier dans un aéronef (1), comprenant, agencés de manière rotative sur un axe de rotation (RA) dudit rotor (3b) : une poutre oscillante (3d), configurée pour fixer à celle-ci au moins deux pales de rotor (3b1, 3b2), ou un rotor monobloc avec au moins deux pales, sur des côtés opposés de celle-ci, ladite poutre oscillante (3d) étant conçue pour réaliser un mouvement d'oscillation par rapport audit axe de rotation (RA) et avoir au moins deux premières pattes (3j) agencées sur des côtés opposés à une première distance par rapport audit axe de rotation (RA) ;
une pièce formant moyeu (3f) située au-dessous de ladite poutre oscillante (3d), ladite pièce formant moyeu (3f) ayant au moins deux bras (3g1, 3g2) qui s'étendent vers l'extérieur dans une direction radiale par rapport audit axe de rotation (RA), chacun desdits bras (3g1, 3g2) ayant une deuxième patte (31) agencée à une deuxième distance par rapport audit axe de rotation (RA), ladite pièce formant moyeu (3f) étant une pièce entraînée agencée pour être reliée
à un arbre d'entraînement d'un moteur pour entraîner ledit rotor (3b) ;
une pièce formant pont (3h) située au-dessus de ladite poutre oscillante (3d), ladite pièce formant pont (3h) ayant au moins deux bras qui s'étendent vers l'extérieur dans une direction radiale par rapport audit axe de rotation (RA), chacun desdits arbres ayant une troisième patte (3m) agencée à une troisième distance par rapport audit axe de rotation (RA) ;
dans lequel lesdites première à troisième pattes (3j, 31, 3m) sont soit parallèles soit inclinées par rapport audit axe de rotation (RA), de telle sorte que des broches de raccordement respectives (3n) qui passent à travers lesdites première à troisième pattes (3j, 31, 3m) de chaque côté dudit axe de rotation (RA) soient parallèles ou, dans le cas de première à troisième pattes inclinées, orientées obliquement par rapport audit axe de rotation (RA) ; et dans lequel une paire de bagues élastiques (3k1, 3k2) sont agencées sur chacune desdites broches de raccordement (3n) entre ladite première patte (3j) et ladite deuxième patte (31) et entre ladite première patte (3j) et ladite troisième patte (3m), respectivement.

2. Palier (3c) selon la revendication 1, dans lequel les bagues élastiques (3k1, 3k2) sont précomprimées au moyen des broches de raccordement (3n).

3. Palier (3c) selon la revendication 1 ou 2, comprenant en outre un épaulement (3aa) sur chacune des broches de raccordement (3n), lequel épaulement (3aa) est en contact avec une patte respective parmi lesdites troisièmes pattes (3m).

4. Palier (3c) selon l'une des revendications 1 à 3, dans lequel les bagues élastiques (3k1, 3k2) sont conçues sous la forme de cônes tronqués, de préférence avec une base respective en contact avec ladite poutre oscillante (3d).

5. Palier (3c) selon l'une des revendications 1 à 4, dans lequel chaque broche de raccordement (3n) est raccordée par filetage à l'une desdites deuxième (31) et troisième pattes (3m), dans lequel, de préférence, chaque broche de raccordement (3n), à une première extrémité, a un filetage extérieur correspondant (3z) tandis que ladite deuxième ou troisième patte (3l, 3m) a un filetage intérieur correspondant (3y).

6. Palier (3c) selon la revendication 5, dans lequel chaque broche de raccordement (3n) a un filetage extérieur à une deuxième extrémité qui vient en prise par filetage avec un écrou de vis (3s).

7. Palier (3c) selon l'une des revendications 1 à 6, dans lequel la pièce formant moyeu (3f) et ladite pièce formant pont (3h) sont tournées dans des directions différentes par rapport à la poutre oscillante (3d) autour dudit axe de rotation (RA).

8. Palier (3c) selon l'une des revendications 1 à 7, dans lequel lesdites première à troisième pattes (3j, 31, 3m) sont inclinées de 15° à 50°, de préférence de 20° à 40°, le plus préférablement de 30 à 35°, par rapport audit axe de rotation (RA).

9. Palier selon l'une des revendications 1 à 6, dans lequel ladite pièce formant moyeu (3f) et ladite pièce formant pont (3h) sont alignées par rapport à la poutre oscillante (3d), en particulier dans le cas d'un rotor non alimenté.

10. Palier (3c) selon l'une des revendications 1 à 9, comprenant en outre une broche centrale (3i) s'étendant le long dudit axe de rotation (RA), au moins à travers ladite pièce formant moyeu (3f), ladite poutre oscillante (3d) et ladite pièce formant pont (3h), laquelle broche centrale (3i) est conçue pour fixer une position relative de ladite pièce formant moyeu (3f) et de ladite pièce formant pont (3h) sur ledit axe de rotation (RA).

11. Palier (3c) selon la revendication 10, comprenant en outre un manchon incliné (3t) autour de ladite broche centrale (3i) s'étendant à travers une ouverture (3v) dans ladite poutre oscillante (3d), ledit manchon incliné (3t) se présentant de préférence sous la forme d'un cône doublement tronqué, un diamètre maximal de celui-ci présentant un faible jeu par rapport à un diamètre intérieur de ladite ouverture (3v), dans lequel, le plus préférablement, ladite pièce formant moyeu (3f) et ladite pièce formant pont (3h) viennent en butée contre des extrémités opposées dudit manchon (3t).

12. Palier (3c) selon l'une des revendications 1 à 11, dans lequel ladite pièce formant pont (3h) comprend au moins une butée en saillie (3w), de préférence au moins une butée en saillie (3w) de chaque côté de l'axe de rotation (RA), sur une face inférieure de celle-ci opposée à la poutre oscillante (3d).

13. Palier (3c) selon l'une des revendications 1 à 12, dans lequel au moins certaines, de préférence la totalité, desdites première à troisième pattes (3j, 31, 3m) sont agencées à des extrémités libres respectives de ladite poutre oscillante (3d), de ladite pièce formant moyeu (3f) et de ladite pièce formant pont (3h), respectivement.

14. Palier (3c) selon l'une des revendications 1 à 13, dans lequel un axe d'oscillation (TA) est tourné selon un angle ϕ, ϕ > 0° ou ϕ < 0°, de préférence -60° < ϕ < -30°, par rapport à un axe normal (NA) du rotor, lequel axe normal (NA) est orienté selon des angles droits par rapport à un axe rotor (RA').

15. Aéronef (1) avec au moins une unité de propulsion (3) comprenant un rotor (3b),
dans lequel ledit au moins un rotor (3b) comprend un palier (3c) selon l'une des revendications 1 à 14, dans lequel au moins deux pales de rotor (3b1, 3b2) dudit au moins un rotor (3b) sont fixées à une poutre oscillante (3d) dudit palier (3c) sur des côtés opposés de celle-ci, dans lequel ladite pièce formant moyeu (3f) est raccordée à un arbre d'entraînement d'un moteur (3a) compris dans ladite au moins une unité de propulsion (3), dans lequel l'aéronef est en particulier un aéronef VTOL à rotors multiples avec des unités de propulsion électriques distribuées, dont au moins certaines comprennent le rotor.
